# EUROPÄISCHE PATENTSCHRIFT

(11) **EP 3 484 656 B1**
(45) Veröffentlichungstag und Bekanntmachung des Hinweises auf die Patenterteilung: **10.11.2021**
(21) Anmeldenummer: 17762128.1
(22) Anmeldetag: 07.09.2017
(51) Int. Cl.: B23K 26/03, B23K 26/073, B23K 26/08, B23K 26/064, B23K 26/21, B23K 26/211

(54) **VERFAHREN UND LASERBEARBEITUNGSMASCHINE ZUM LASERSCHWEISSEN EINES ERSTEN UND EINES ZWEITEN WERKSTÜCKABSCHNITTS**
METHOD AND LASER MACHINING DEVICE FOR LASER WELDING OF A FIRST AND A SECOND WORKPIECE SECTION
PROCÉDÉ ET MACHINE D'USINAGE AU LASER POUR LE SOUDAGE AU LASER D'UNE SECTION D'UNE PREMIÈRE ET D'UNE SECONDE PIÈCE

(30) Priorität: 27.09.2016 DE 102016118189
(43) Veröffentlichungstag der Anmeldung: 22.05.2019
(73) Patentinhaber: TRUMPF Werkzeugmaschinen GmbH + Co. KG, 71254 Ditzingen (DE)
(72) Erfinder: ANDREASCH, Wolfgang, 71384 Weinstadt (DE)
(74) Vertreter: Mammel und Maser
(86) Internationale Anmeldenummer: PCT/EP2017/072472
(87) Internationale Veröffentlichungsnummer: WO 2018/059901

(56) Entgegenhaltungen:
- DE-A1- 19 724 986
- DE-A1-102007 018 400
- DE-A1-102010 003 750
- DE-A1-102010 018 687
- DE-A1-102014 108 426
- DE-A1-102015 003 591

## Beschreibung

Die Erfindung betrifft ein Verfahren zum Laserschweißen eines ersten und eines zweiten Werkstückabschnitts mit einem Laserstrahl sowie eine Laserbearbeitungsmaschine zur Durchführung des Verfahrens.

Aus der DE 10 2015 003 591 A1 (Basis für den Oberbegriff der Ansprüche 1 und 10) ist ein Verfahren zum Laserschweißen eines ersten und zweiten Werkstückabschnitts mittels eines Laserstrahls bekannt. Dabei wird eine Spaltbreite des Fügespaltes der zu verschweißenden Werkstückabschnitte erfasst und in Abhängigkeit der Spaltbreite entweder ein Zusatzwerkstoff zur Bildung einer Schweißnaht zugegeben oder eine Schweißnaht ohne Zusatzwerkstoff gebildet.

Aus der DE 10 2010 018 687 A1 ist eine Anordnung zum Laserstrahlschweißen mit einem Zusatzwerkstoff bekannt. Für eine Vorwärmung des Zusatzwerkstoffs ist an der Zuführung für den Zusatzwerkstoff mindestens ein an einen Wechselstromgenerator angeschlossener Induktor angeordnet.

Aus der DE 10 2014 108 426 A1 ist ein Laserbearbeitungskopf mit taktiler Nahtführung bekannt. Dieser Laserbearbeitungskopf umfasst ein Drahtführmodul mit einer Einrichtung zur Zuführung des Drahtes und eine Strahlführungseinrichtung. Des Weiteren ist ein optisches Sensormodul zum Erfassen der Lage der Drahtspitze vorgesehen, wobei ein Laserspot des Laserstrahls mit Hilfe der Strahlführungseinrichtung auf die Lage der Drahtspitze positioniert ist.

Aus der DE 10 2007 018 400 A1 ist ein optisches System für einen Materialbearbeitungskopf bekannt.

Aus der JP 09-108 869 A1 ist eine Laserbearbeitungsmaschine bekannt, bei welcher ein frei rotierbarer Laserbearbeitungskopf vorgesehen ist, der einen Laserstrahl auf einen Fügespalt zwischen den zu verschweißenden Werkstückabschnitten richtet. An einem Gehäuse des Laserbearbeitungskopfes mit einer Fokussieroptik geht eine Zuführvorrichtung für einen Zusatzdraht beziehungsweise Schweißdraht hervor, welche frei um den Laserbearbeitungskopf rotierbar am Laserbearbeitungskopf angeordnet ist. Während dem Laserschweißen wird die Zuführeinrichtung zum Laserbearbeitungskopf derart rotierend angetrieben, dass die Zuführung des Zusatzdrahtes vorauseilend zum Laserstrahl ausgerichtet ist.

Durch die FR 2 823 688 A1 wird eine Vorrichtung zum Laserschweißen vorgeschlagen. Über eine Fokussieroptik wird ein Laserstrahl zu einem Ring aufgeweitet und anschließend über eine Linse zu einem Punkt fokussiert, der in dem Fügespalt auftrifft. Innerhalb des sich fokussierenden Laserstrahls ist eine Zuführeinrichtung in Form einer Düse vorgesehen, um schweißfähiges Material senkrecht zur Werkstückebene dem Fügespalt zuzuführen.

Aus der DE 94 01 081 U1 ist eine Positioniervorrichtung zur Aufnahme eines Laserbearbeitungskopfes und einer Zuführeinrichtung für einen Schweißdraht bekannt. Diese Positioniereinrichtung nimmt einen Laserbearbeitungskopf in einem Winkel von 45° zur Oberfläche der zu verschweißenden Werkstückabschnitte auf. Zwischen dem Laserbearbeitungskopf und der Oberfläche der zu bearbeitenden Werkstückabschnitte ist die Zuführeinrichtung vorgesehen, um eine Schweißnaht in dem Fügespalt der zu verschweißenden Werkstückabschnitte zu erzeugen.

Aus der DE 10 2013 008 085 B4 sind ein Verfahren und eine Vorrichtung zum Fügen von Werkstücken mit einem Bearbeitungsstrahl bekannt, bei dem der Bearbeitungsstrahl mit einem Bearbeitungskopf unter Zufuhr eines Zusatzwerkstoffes entlang eines Fügestoßes zwischen den zu fügenden Werkstücken geführt wird. Während des Fügens wird eine momentane Relativgeschwindigkeit zwischen dem Bearbeitungskopf und dem Werkstück ermittelt. Eine Leistung des Bearbeitungsstrahls wird in Abhängigkeit der momentanen Relativgeschwindigkeit gesteuert. Die Zuführmenge des Zusatzwerkstoffes pro Zeiteinheit wird in Abhängigkeit der momentanen Relativgeschwindigkeit und einer momentanen Nahtbreite der Verbindungsnaht geregelt.

Aus der DE 44 01 597 A1 ist eine Laserbearbeitungsvorrichtung mit einer Strahlmode-Steuerung bekannt. Zur Bearbeitung des Werkstücks wird auf der Grundlage einer Änderung der Fokussiereigenschaften jedes Modes und des Bewegungsbetrages des Brennpunktes des Strahls in Bezug auf eine Änderung in einem Laserausgangswert ein optimal angepasster Laserstrahlmode eingestellt.

Aus der DE 197 24 986 C2 sind ein Verfahren zum Schweißen von Werkstücken und eine Vorrichtung zur Durchführung des Verfahrens bekannt. In einem Vorversuch wird ein Grenzwert eines Strahlungssignals ermittelt, welcher bei Spaltbreite null zur Einhaltung einer Schweißung mit vorgegebener Mindestqualität nicht über- oder unterschritten werden darf. Bei dem eigentlichen Schweißvorgang wird die Breite des Spaltes im Schweißpunkt bestimmt und die aktuellen Grenzwerte der maximalen und minimalen Breite des Spaltes auf Basis einer Korrekturbeziehung gegenüber den in den Vorversuchen ermittelten Grenzwerten abgeglichen, wobei die aktuellen Grenzwerte um einen der aktuellen Spaltbreite im Schweißpunkt entsprechenden Betrag verschoben wird.

Aus der DE 10 2010 003 750 A1 ist ein Verfahren zur Veränderung einer Strahlprofilcharakteristik eines Laserstrahls bekannt. Zur Veränderung der Strahlprofilcharakteristik eines ausgekoppelten Laserstrahls wird eine Mehrfachclad-Faser eingesetzt. In Abhängigkeit der Einkopplung des Laserstrahls kann ein ausgefülltes Kreisprofil angesteuert werden, welches beispielsweise für einen Laserschneidprozess eingesetzt wird. Des Weiteren kann ein Ringprofil erzeugt werden, welches beispielsweise für einen Laserschweißprozess eingesetzt wird. Darüber hinaus kann ein breites ausgefülltes Strahlprofil erzielt werden, welches ebenfalls zum Laserschweißen eingesetzt werden kann.

Der Erfindung liegt die Aufgabe zugrunde, ein Verfahren sowie eine Laserbearbeitungsmaschine zum Laserschweißen eines ersten und eines zweiten Werkstückabschnitts mittels eines Laserstrahls vorzuschlagen, durch welche in Abhängigkeit der Parameter zum Verschweißen des ersten und zweiten Werkstückabschnitts eine weitere Verbesserung in der Qualität der zu erzeugenden Schweißnaht ermöglicht wird.

Diese Aufgabe wird durch ein Verfahren zum Laserschweißen gemäß dem Anspruch 1 gelöst, bei dem zumindest eine Spaltbreite eines zwischen dem ersten und zweiten Werkstückabschnitt gebildeten Fügespalts erfasst wird, die erfasste Spaltbreite entlang des Verlaufs des Fügespaltes ausgewertet und mit zumindest einem ersten und einem zweiten Spaltmaß verglichen wird, wobei das erste Spaltmaß eine Spaltbreite umfasst, bei der eine Schweißnaht ohne Zusatzwerkstoff gebildet wird und das zweite Spaltmaß eine Spaltbreite umfasst, bei dem zum Auffüllen des Fügespaltes ein Zusatzwerkstoff für die Bildung der Schweißnaht zugeführt wird und bei einer erfassten Spaltbreite, die innerhalb des ersten Spaltmaßes liegt, während dem Laserschweißen die Zuführung des Zusatzwerkstoffes zum Fügespalt stillgesetzt und ein Strahlprofil des Laserstrahls mit einem Punkt- oder Ringfokus eingestellt wird oder bei einer erfassten Spaltbreite, die innerhalb des zweiten Spaltmaßes liegt, eine Zuführung des Zusatzwerkstoffs zum Fügespalt angesteuert und ein Strahlprofil des Laserstrahls mit einem Ringfokus eingestellt wird. Dadurch wird in Abhängigkeit der Spaltbreite des Fügespaltes, insbesondere entlang des Verlaufs des Fügespaltes, eine Optimierung des Laserschweißens ermöglicht, indem eine Zuschaltung oder eine Abschaltung des Zusatzwerkstoffes einerseits und eine entsprechende Anpassung des Strahlprofils des Laserstrahls andererseits angesteuert werden. Es wird durch dieses Verfahren also ein tolerantes Laserschweißen ermöglicht, das heißt, dass auch bei abweichenden Verhältnissen entlang eines Fügespaltes eine gleichbleibende Schweißqualität erzielt werden kann.

Nach einer bevorzugten Ausführungsform des Verfahrens wird der Fügespalt mit einer optischen Einrichtung erfasst, wobei vorzugsweise die Erfassung der Spaltbreite des Fügespaltes und/oder dessen Verlauf während einem Teach-in-Modus durchgeführt werden. Dadurch kann eine Prozesszeitoptimierung ermöglicht sein. Alternativ kann unmittelbar vor dem Einbringen der Schweißnaht durch ein Sensorsystem der Fügespalt erfasst werden, wobei dieses Sensorsystem vorzugsweise in der Optik im Laserbearbeitungskopf integriert ist, welche relativ zum Laserstrahl koaxial oder off-axis den Fügespalt im Vorlauf erfasst. Die erfassten tatsächlichen geometrischen Verhältnisse des Fügespaltes werden durch die optische Einrichtung oder das Sensorsystem erfasst und an die Steuerungseinrichtung weitergeleitet, durch welches nach einem Abgleich der hinterlegten Parameter für die Auswahl des ersten und zweiten Spaltmaßes eine entsprechende Ansteuerung zur Zuführung oder Abschaltung des Zusatzwerkstoffes und zur Ausbildung des Strahlprofils des Laserstrahls durchgeführt wird.

Bevorzugt werden die Schweißparameter für das erste Spaltmaß zumindest der zu verschweißenden Werkstückabschnitte ausgehend von einer Materialdicke ausgewählt. Ein Auswahlkriterium hierfür kann die Materialdicke der zu verschweißenden Werkstücke sein, welche kleiner als das Spaltmaß ist. Neben der Materialdicke können auch Fügegeometrien und/oder das Material der zu verschweißenden Werkstücke in der Auswahl mit einfließen.

Bevorzugt wird das erste Spaltmaß zumindest von einer Materialdicke der zu verschweißenden Werkstückabschnitte ausgehend ausgewählt, wenn das erste Spaltmaß gleich oder kleiner als ein Anteil von 15% der Materialdicke des zu verschweißenden Werkstückabschnittes, besonders bevorzugt gleich oder kleiner als ein Anteil von 10 % der Materialdicke des zu verschweißenden Werkstückabschnittes ist. Dies kann insbesondere für Werkstücke mit einer Materialdicke von 3 mm oder weniger gelten. In solchen Fällen eignet sich besonders das Laserschweißen ohne Zuführung des Zusatzwerkstoffes. In Abhängigkeit der tatsächlichen Breite des Fügespaltes kann ergänzend noch ein punkt- oder ringförmiger Fokus für das Strahlprofil des Laserstrahls ausgewählt und angesteuert werden.

Des Weiteren ist bevorzugt das zweite Spaltmaß größer als das erste Spaltmaß und umfasst alle Breiten des Fügespaltes, welche außerhalb des ersten Spaltmaßes liegen. Dadurch kann eine einfache Differenzierung zwischen dem ersten und zweiten Spaltmaß sowie der dazugehörigen Einstellparameter für das Laserschweißen ermöglicht sein.

Eine bevorzugte Ausführungsform des Verfahrens sieht vor, dass der Zusatzwerkstoff zur Strahlachse des Laserstrahls in Schweißrichtung vorauseilend dem Fügespalt zugeführt wird. Dies weist den Vorteil auf, dass nach dem Aufschmelzen des Zusatzwerkstoffes die Schweißstelle, bzw. das Schmelzbad, durch den Laserstahl noch vollständig überfahren und dabei zusätzlich Wärme eingebracht wird, wodurch sich die Qualität der Schweißnaht verbessert. Der zusätzliche Wärmeeintrag richtet sich so vorwiegend in Schweißnahtrichtung, weshalb kaum oder im günstigsten Fall kein zusätzlicher Bauteilverzug entsteht.

Der Zusatzwerkstoff kann gemäß einer ersten Ausführungsform des Verfahrens ein Zusatzdraht sein, der über eine Drahtzuführeinrichtung zugeführt wird. Das Material und/oder die Dicke des Drahtes wird an die weiteren Parameter angepasst, die sich aus den zu verschweißenden Werkstückabschnitten ergeben, wie beispielsweise der Werkstoff, die Dicke der Werkstückabschnitte und/oder die Fügegeometrie. Alternativ kann als Zusatzwerkstoff ein Pulver eingesetzt werden, welches über eine Düse zugeführt wird. Diese eine Düse oder mehrere Düsen können neben dem Laserstrahl oder koaxial zum Laserstrahl angeordnet sein. Alternativ kann auch eine koaxiale Ringspaltdüse eingesetzt werden.

Durch das Strahlprofil des Laserstrahls mit einem Ringfokus wird eine ringförmige Strahlfläche gebildet, die den Fügespalt überdeckt, wobei durch einen inneren Strahlflächenrand ein innenliegender strahlfreier Bereich begrenzt wird, welcher vorzugsweise im Wesentlichen der Breite des Fügespaltes entspricht oder breiter ist und ein äußerer Strahlflächenrand der ringförmigen Strahlfläche beide Ränder der zu verschweißenden Werkstückabschnitte überdeckt. Eine solche Anpassung ermöglicht einerseits ein sicheres Schmelzen des Zusatzwerkstoffes im Fügespalt sowie ein Anschmelzen der Fügegeometrien der Werkstückabschnitte, um eine Schweißverbindung mit einer hohen Qualität zu erzielen.

Bevorzugt wird in einem Strahlflächenabschnitt des ringförmigen Strahlprofils des Laserstrahls, der durch einen in Vorlaufrichtung vorderen, den Fügespalt überdeckenden Bereich der ringförmigen Strahlfläche gebildet wird, der Zusatzwerkstoff zugeführt. Dies weist den Vorteil auf, dass der Zusatzwerkstoff schnell angeschmolzen und tiefer in den Fügespalt eingebracht werden kann und zunehmend die Randbereiche entfernt vom Fügespalt aufgewärmt werden. Dadurch kann ein homogenes Gefüge in der Schweißnaht gebildet sein.

Bevorzugt wird in einem nacheilenden, den Fügespalt überdeckenden Strahlflächenabschnitt des Ringfokus das im vorauseilenden Flächenabschnitt gebildete Schmelze beziehungsweise Schmelzbad nachgewärmt. Dadurch kann der Temperaturgradient zum umliegenden Material verringert werden, wodurch die Abkühlgeschwindigkeit sinkt. Dies kann einen positiven Einfluss auf die Entstehung von Heißrissen haben.

Eine weitere vorteilhafte Ausgestaltung des Verfahrens sieht vor, dass die Breite des den Fügespalt überdeckenden Strahlabschnitts des Laserstrahls mit dem ringförmigen Strahlprofil durch einen Abstand des Strahlfokus oberhalb oder unterhalb der Ebene der zu verbindenden Werkstückabschnitte eingestellt wird. Dadurch kann in einfacher Weise die Breite des Strahlflächenabschnitts eingestellt werden, der auf den Fügespalt und benachbarten Fügespalt auftrifft.

Alternativ kann das Strahlprofil durch eine 2-in-1-Faser, eine 3-in-1-Faser, eine n-in-1-Faser oder ein Axicon gebildet werden. Diese Ausführungsformen weisen den Vorteil auf, dass keine zusätzlichen bewegten Teile im Bearbeitungskopf erforderlich und zusätzlich sehr hohe Laserintensitäten ermöglicht sind.

Eine weitere bevorzugte Ausführungsform des Verfahrens sieht vor, dass der Zusatzwerkstoff mit einer Zuführeinrichtung dem Fügespalt zugeführt und die Zuführeinrichtung in einer Zuführachse zum Fügespalt, vorzugsweise senkrecht dazu, ausgerichtet wird und der Laserstrahl vom Gehäuse in eine am Gehäuse angeordnete Bewegungseinrichtung eingekoppelt und in eine Strahlachse der Bewegungseinrichtung übergeführt wird, wobei die Strahlachse der Bewegungseinrichtung entsprechend dem Verlauf des Fügespaltes in Schweißrichtung um die Zuführachse rotierend angetrieben wird und während der Rotationsbewegung der Bewegungseinrichtung die Strahlachse den Zuführwerkstoff im Fügespalt kreuzt. Dies weist den Vorteil auf, dass in einfacher Weise eine Bearbeitung von Fügespalten erforderlich ist, die nicht nur ausschließlich einen geradlinigen Verlauf aufweisen. Es können beliebige Linienführungen des Fügespaltes mit einer vorzugsweise kontinuierlichen Verfahrbewegung des Laserbearbeitungskopfes bearbeitet werden können.

Die der Erfindung zugrunde liegende Aufgabe wird des Weiteren durch eine Laserbearbeitungsmaschine gemäß dem Anspruch 10 gelöst. Diese Laserbearbeitungsmaschine umfasst eine Laserquelle und eine Strahlführung, bei welcher mittels einem Laserbearbeitungskopf ein Laserstrahl auf einen Fügespalt gerichtet und eine Zuführeinrichtung vorgesehen ist, die in einer Zuführachse liegt und den Zusatzwerkstoff in der Zuführachse dem Fügespalt zuführt und an dem Gehäuse eine Bewegungseinrichtung vorgesehen ist, durch welche der im Gehäuse entlang einer Hauptachse geführte Laserstrahl oberhalb dem Fügespalt umgelenkt und in eine Strahlachse in der Bewegungseinrichtung übergeführt ist, welche in einem Winkel zur Zuführachse oder Hauptachse ausgerichtet ist und den Fügespalt kreuzt und die Bewegungseinrichtung um die Zuführachse oder Hauptachse rotierend am Gehäuse vorgesehen ist. Dadurch wird eine am Laserbearbeitungskopf feststehende Zuführachse gebildet, welche die Zuführgenauigkeit des Zusatzwerkstoffs verbessert. Darüber hinaus kann durch die Ausrichtung der Strahlachse unabhängig zur Linearbewegung beziehungsweise Verfahrbewegung des Bearbeitungskopfes eine exakte Anpassung an den tatsächlichen Verlauf des Fügespaltes ermöglicht sein, um die Schweißnaht zu bilden. Die Strahlachse wird auf den Verlauf des Fügespalts ausgerichtet.

Bevorzugt liegt die Zuführachse in der Hauptachse. Dadurch wird der Aufbau des Laserbearbeitungskopfes vereinfacht. Alternativ kann diese auch parallel zur Hauptachse ausgerichtet sein.

Bevorzugt ist die Hauptachse der Kollimationsoptik des Laserstrahls senkrecht zum Fügespalt ausgerichtet. Dadurch können des Weiteren einfache geometrische Verhältnisse im Aufbau des Laserbearbeitungskopfes und auch in der Ansteuerung mittels eines ein-oder mehrachsigen Linearachsensystems geschaffen werden.

Eine bevorzugte Ausführungsform der Laserbearbeitungsmaschine sieht vor, dass die Strahlachse der Bewegungseinrichtung in einem Winkel von mindestens ± 90°, insbesondere mindestens ± 135°, drehbar um die Hauptachse am Gehäuse gelagert ist.

Die Bewegungseinrichtung der Laserbearbeitungsmaschine weist bevorzugt zumindest einen Umlenkspiegel, eine insbesondere als Fokussierlinse ausgebildete Bearbeitungsoptik und vorzugsweise ein strahlaustrittsseitig angeordnetes Schutzglas auf. Dadurch können in einfacher Weise eine Auskopplung des Laserstrahls aus der Hauptachse und eine Überleitung in die zum Fügespalt ausrichtbare Strahlachse erfolgen. Bevorzugt ist diese Bewegungseinrichtung an einem die Kollimationsoptik umfassenden Gehäuse des Laserbearbeitungskopfes mittels eines Drehlagers angeordnet.

Eine weitere bevorzugte Ausgestaltung der Laserbearbeitungsmaschine sieht vor, dass die Zuführungseinrichtung einen fest am Gehäuse des Laserbearbeitungskopfes angeordneten Halter zur ortsfesten Aufnahme der Zuführdüse in der Hauptachse aufweist. Die Bewegungseinrichtung ist bevorzug drehbar um diese Hauptachse. Dadurch sind definierte Verhältnisse gegeben, die infolge einer präzisen Schweißnahtbildung ermöglicht werden. Alternativ kann der Halter auch an der Bewegungseinrichtung vorgesehen sein, welcher um die Hauptachse am Gehäuse drehbar ist.

Des Weiteren ist bevorzugt an dem Gehäuse eine Fördereinrichtung für den Zuführwerkstoff vorgesehen. Im Falle der Ausbildung eines Drahtes als Zusatzwerkstoff ist eine Drahtzuführdüse vorgesehen, durch welche zentrisch der Zusatzdraht hindurchgeführt ist, der mittels der als Drahtförderer ausgebildeten Drahtfördereinrichtung kontrolliert und vorzugsweise über die Steuerungseinrichtung angesteuert zugeführt wird. Alternativ kann auch ein Pulver als Zusatzwerkstoff zugeführt werden. Die Zuführdüse liegt bevorzugt in der Hauptachse.

Eine weitere Ausgestaltung der Laserbearbeitungsmaschine sieht an dem Halter der Zuführeinrichtung einen Linienlaser vor, dessen Laserstrahl vorzugsweise auf den Fügespalt gerichtet ist. Dieser zusätzliche Linienlaser kann zusammen mit einem geeigneten Sensor zur Laserlinien-Triangulation genutzt werden. Hiermit lassen sich insbesondere Abstandsinformationen, sowie auch Spaltlage und Spaltbreite bestimmen.

Eine weitere vorteilhafte Ausgestaltung der Laserbearbeitungsmaschine sieht an der Bewegungseinrichtung eine vorzugsweise in der Höhe einstellbare Lineardüse zum Zuführen von Schutzgas vor. Diese Lineardüse ist vorteilhafterweise nacheilend zur Zuführeinrichtung vorgesehen, wodurch eine bessere Abdeckung der abkühlenden Schmelze erreicht wird und es zu weniger Oxidation an der Nahtoberraupe kommt, wodurch eine verbesserte Schweißnahtqualität erzielt werden kann.

Zur Erzeugung des ringförmigen oder punktförmigen Strahlprofils des Laserstrahls kann eine 2-in-1-Faser, eine 3-in-1-Faser oder ein Axicon oder eine N-in-1-Faser mit mehreren koaxialen Ringfasern vorgesehen sein. Ein Vorteil der verwendeten Faser ist, dass durch das Fehlen von zusätzlichen optomechanischen Komponenten, wie dies bei dem Axicon erforderlich wäre, der Platzbedarf der Optik geringer ist und keine zusätzliche Störkontur entsteht.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht auf eine Werkzeugmaschine,
Figur 2 eine perspektivische Ansicht einer Laserbearbeitungsanlage,
Figur 3 eine schematische Darstellung eines in eine 2-in-1-Faser eingekoppelten Laserstrahls zur Erzeugung eines Punktfokus,
Figur 4 eine schematische Darstellung eines in eine 2-in-1-Faser eingekoppelten Laserstrahls zur Erzeugung eines Ringfokus,
Figur 5 eine schematische Schnittansicht eines Laserbearbeitungskopfes der Laserbearbeitungsmaschine in Figur 2,
Figur 6 eine schematische Schnittansicht einer alternativen Ausführungsform des Laserbearbeitungskopfes zu Figur 5,
Figur 7 eine schematische Schnittansicht einer alternativen Ausführungsform des Laserbearbeitungskopfes zu Figur 6,
Figur 8 eine schematische Seitenansicht eines Schweißprozesses zur Bildung einer Schweißnaht zwischen zwei Werkstückabschnitten,
Figur 9 eine schematische Ansicht von oben auf den Verfahrensschritt gemäß Figur 8,
Figuren 10 und 11 schematische Seitenansichten alternativer Ausführungsformen des Verfahrens zu Figur 8,
Figur 12 eine schematische Ansicht von oben auf einen gekrümmten Verlauf eines Fügespaltes, in welchem mehrere Schweißpositionen dargestellt sind, und
Figur 13 eine schematische Ansicht eines Brechzahlverlaufes bei einer N-in-1-Faser.

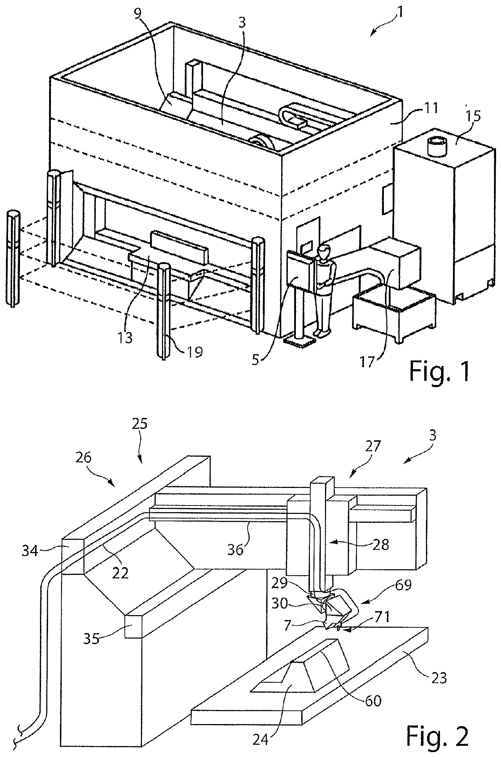

In Fig. 1 ist eine Werkzeugmaschine 1 mit einer Laserbearbeitungsanlage 3 als Grundmaschine für die Bearbeitung eines Werkstücks dargestellt. Die Bedienung der Werkzeugmaschine 1 erfolgt über ein Bedienpult 5, beispielsweise über die Erstellung und Einstellung von NC-Programmen, die spezifische auf Werkstücke und deren Bearbeitung abgestimmte Arbeitsabläufe festlegen. Ein z.B. rückseitig der Werkzeugmaschine 1 angeordneter nicht dargestellter Schaltschrank weist als Teil einer Werkzeugmaschinensteuerung die zugehörige Maschinensteuerung, eine elektrische Versorgung von Antrieben sowie Logik- und Leistungsteile auf.

Ein nicht explizit in Fig. 1 gezeigtes Lasergerät der Laserbearbeitungsanlage 3 dient der Erzeugung von Laserstrahlung und kann beispielsweise auf einem Festkörperlaser wie einem Scheibenlaser oder Faserlaser oder einem Gaslaser wie einem CO2-Laser basieren. Über Laserlichtkabel und/oder Spiegel kann die Strahlführung vom Lasergerät zur Werkstück erfolgen. Ein Kühlaggregat 9 für das Lasergerät sorgt für die Kühlung optischer Bauelemente wie Umlenk- oder Kollimationsspiegel und des Schaltschranks. Eine Schutzkabine 11 dient der Abschirmung von Laserstrahlung nach außen. In Fig. 1 ist zur Einsichtnahme die Dachverkleidung der Schutzkabine 11 nicht dargestellt.

Weitere Komponenten der Werkzeugmaschine 1 umfassen beispielsweise einen Rotationswechsler 13 zum Halten von zu bearbeitenden Werkstücken und zum leichten Entnehmen von bearbeiteten Werkstücken, einen Kompaktentstauber 15 zur Absaugung von Rauchgasen und Schwebeteilchen aus dem Innenraum, einen Schrottförderer 17 sowie integrierte, nicht explizit gezeigte Elemente für die Pneumatik, für die Schneid- und Schweißgasversorgung sowie für die Zentralschmierung. Ferner kann ein Lichtgitter 19 einen externen Zugangsbereich zum Rotationswechsler 13 abgrenzen.

Ein durch die Maschinensteuerung kontrollierter Arbeitsablauf erlaubt die Bearbeitung des Werkstücks auf eine vorbestimmte Art und Weise unter Zusammenwirken der verschiedensten Komponenten der Laserbearbeitungsmaschine.

Fig. 2 zeigt schematisch den Aufbau der Laserbearbeitungsanlage 3 im Innenraum der Schutzkabine 11. Die Schutzkabine 11 umgibt eine Bewegungseinheit 25 mit funktionsrelevanten Bauteilen wie X-, Y- und Z-Schlitten 26, 27, 28 und Drehgelenken 29, 30 zur Bewegung von Strahlführungs- und Medienzuführungskomponenten relativ zu einem Werkstück 24. Faltenbälge 34, 35, 36 decken entsprechend Leitungen und mechanische Komponenten ab und verlaufen z.B. entlang der Führungen der X- und Y-Schlitten 26, 27.

Die Strahlführungskomponenten umfassen beispielsweise ein Laserlichtkabel 22, eine Kollimationsoptik 51 und eine Bearbeitungsoptik 66 zum Leiten und Fokussieren des Laserstrahls 21 auf ein Werkstück 24. Zumindest die Bearbeitungsoptik 66 ist üblicherweise in einem Bearbeitungskopf 7 vorgesehen, der im Wesentlichen frei positioniert und ausgerichtet werden kann, und aus dem der Laserstrahl 21 austritt. Bevorzugt ist auch die Kollimationsoptik 51 im Bearbeitungskopf 7 vorgesehen. Insbesondere kann der Bearbeitungskopf 7 in einem durch die X-, Y- und Z- Schlitten 26, 27, 28 sowie die Drehgelenke 29, 30 bestimmten Bereich jede einstellbare Position und Orientierung einnehmen. Den X-, Y- und Z- Schlitten 26, 27, 28, sowie den Drehgelenken 29, 30 sind Antriebseinheiten zugeordnet, die es erlauben, eine Relativbewegung des Bearbeitungskopfs 7 bezüglich des Werkstücks 24 durchzuführen. Daraus ergibt sich ein Arbeitsraum, der alle Punkte umfasst, die durch den entsprechend fokussierten austretenden Laserstrahl 21 bearbeitbar sind.

Medienzuführungskomponenten sind zum Beispiel eine Zuführeinrichtung 69 für einen Zusatzwerkstoff und/ oder Schutz- oder Prozessgas, sowie eine oder mehrere Zuführdüsen 71, welche z.B. am Bearbeitungskopf 7 befestigt sind.

Das Werkstück 24 ist in der Ausführung gemäß Fig. 2 aufgrund einer Spanntechnik ortsfest auf der Werkstücklagerungsvorrichtung 23 gelagert, so dass hier die Bearbeitung nur von oben erfolgen kann. In alternativen Ausführungsformen ist das Werkstück 24 ebenfalls oder nur das Werkstück 24 im Raum bewegbar. Fig. 2 zeigt schematisch eine Werkstücklagerungsvorrichtung 23 mit einer Werkstückauflage zum Lagern des zu bearbeitenden Werkstücks 24. Zur Werkstücklagerungsvorrichtung 23 gehören in der Regel weitere Elemente, wie Spanner zum Spannen des Werkstücks 24, sowie Sensoren für die Bauteilerkennung. Weitere Elemente sind beispielsweise ein externer Taster für die Beladebestätigung oder eine Statusleuchte, die dem Anwender die Bauteilerkennung signalisiert. Die elektrischen und pneumatischen Schnittstellen zum Anschluss der Elemente können sich beispielsweise im Schaltschrank, am Bedienpult 5 oder am Rotationswechsler 13 befinden.

Die Laserbearbeitungsanlage 3 ist geeignet sowohl ebene Bleche, wie auch dreidimensional, variabel geformte Werkstücke, wie z.B. umgeformte Bleche schneidend, schweißend oder erwärmend zu bearbeiten. Alternativ zur dargestellten Ausführungsform wäre z.B. eine Maschine mit einem 6-Achs-Knickarmroboter in der Lage dieselben Aufgaben auszuführen.

Fig. 2 zeigt ein dreidimensionales Bauteil 24, an dem beispielsweise ein Fügespalt 60 als Eckstoß zwischen zwei Bauteilkanten schweißend zusammengefügt wird.

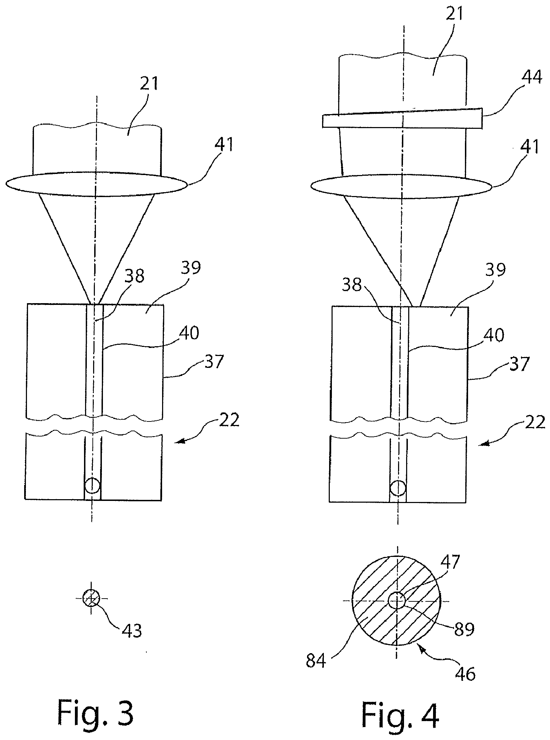

Für die Strahlführung 22 kann beispielsweise gemäß Figur 3 eine 2-in-1-Faser 37 eingesetzt werden, in welche der Laserstrahl 21 aus der Laserquelle 12 eingekoppelt wird. Dadurch ist eine Veränderung der Strahlcharakteristik des Laserstrahls 21 möglich. Bei der 2-in-1-Faser 37 ist vorgesehen, dass ein innerer Kern 38 und ein äußeres Ringprofil 39 z.B. durch eine Zwischenschicht 40 mit geringerem Brechungsindex getrennt sind. Bei einer zentralen Einkopplung des Laserstrahls 21, wie dies in Figur 3 dargestellt ist, kann der Laserstrahl 21 beispielsweise über eine Koppellinse 41 fokussiert werden, so dass der Laserstrahl 21 in den inneren Kern 38 eingekoppelt wird. Am gegenüberliegenden Ende der 2-in-1-Faser 37 weist das Strahlprofil des Laserstrahls 31 einen Punktfokus 43 auf, der ein vollständig ausgefülltes Kreisprofil umfasst. Dadurch kann eine hohe Strahlqualität mit einem scharfen Fokus erzielt werden.

In Figur 4 ist eine schematische Ansicht des Laserstrahls 21 dargestellt, bei welcher der Laserstrahl in ein äußeres Ringprofil 39 der 2-in-1-Faser 37 eingekoppelt ist. Dies kann beispielsweise dahingehend erfolgen, indem eine Keilplatte 44 den Laserstrahl 21 aus einer Achse geringfügig ablenkt und durch die Koppellinse 41 fokussiert, so dass der Laserstrahl 21 in das äußere Ringprofil 39 eingekoppelt wird. Daraus ergibt sich ein Strahlprofil des Laserstrahls 21 mit einem Ringfokus 46, der eine ringförmige Strahlfläche 84 umfasst. Ein innerer freibleibender Bereich 47 wird durch einen innenliegenden Strahlflächenrand 89 begrenzt und im Wesentlichen durch den Durchmesser des inneren Kerns 38 der 2-in-1-Faser 37 bestimmt.

Der Einsatz einer 2-in-1-Faser 37 ist nur beispielhaft. Alternativ kann auch eine 3-in-1-Faser, d.h. eine Faser mit einem zusätzlichen weiteren Ringprofil, vorgesehen sein. Ebenso ist es möglich alternativ zur beschriebenen Stufenindexfaser eine Gradientenindexfaser zu verwenden.

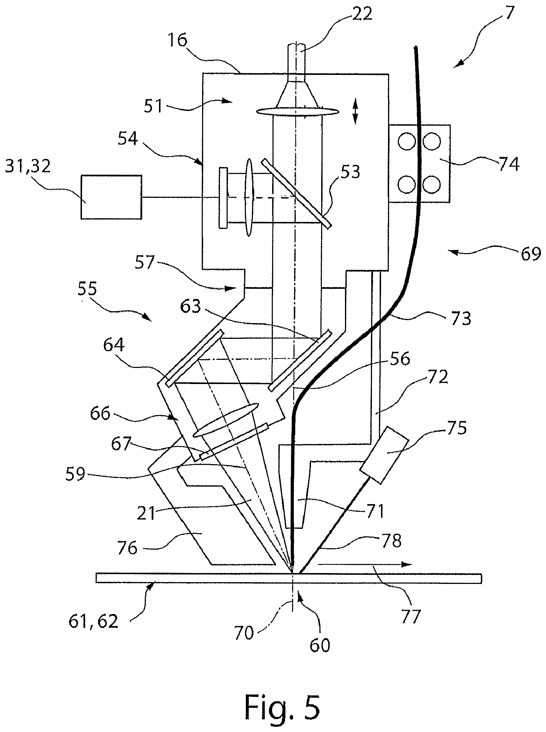

In Figur 5 ist eine schematische Schnittansicht eines Laserbearbeitungskopfes 7 dargestellt. Über die Strahlführung 22 wird der Laserstrahl 21 in das Gehäuse 16 des Laserbearbeitungskopfes 7 eingekoppelt. Die Kollimationsoptik 51 kann das zugeführte Strahlprofil des Laserstrahls 21 an die Arbeitsbedingungen anpassen. Die Kollimationsoptik 51 liegt bevorzugt in der Hauptachse 56 des Laserbearbeitungskopfes 7.

An dem Gehäuse 16 des Laserbearbeitungskopfes 7 ist eine Bewegungseinrichtung 55 vorgesehen, welche vorzugsweise um die Hauptachse 56 drehbar angeordnet sein kann. Bevorzugt ist ein Drehlager 57 vorgesehen, um diese Bewegungseinrichtung 55 um die Hauptachse 56 drehbar aufzunehmen. Diese Bewegungseinrichtung 55 umfasst optische Elemente, durch welche der Laserstrahl 21 von dem Laserbearbeitungskopf 7 aus der Hauptachse 56 ausgekoppelt und in eine Strahlachse 59 übergeführt wird. Diese Strahlachse 59 ist auf einen Fügespalt 60 gerichtet, der durch zwei miteinander zu verschweißende Werkstückabschnitte 61, 62 gebildet ist. Diese Strahlachse 59 ist in einem Winkel von 5° bis 45° zur Hauptachse geneigt. Besonders bevorzugt ist ein Winkel zwischen 7° und 15°, da hierbei eine gute Einkopplung in das Material gewährleistet ist und Rückreflektionen in die Laseroptik vermieden werden.

Das Drehlager 57 kann bevorzugt auch mit einer Kupplung versehen sein, um verschieden ausgestaltete Bewegungseinrichtungen 55 aufnehmen zu können. Dadurch lassen sich auch Optiken für andere Bearbeitungsaufgaben, wie Laserschneiden oder Oberflächenbehandlung, am Gehäuse 16 drehbar befestigen.

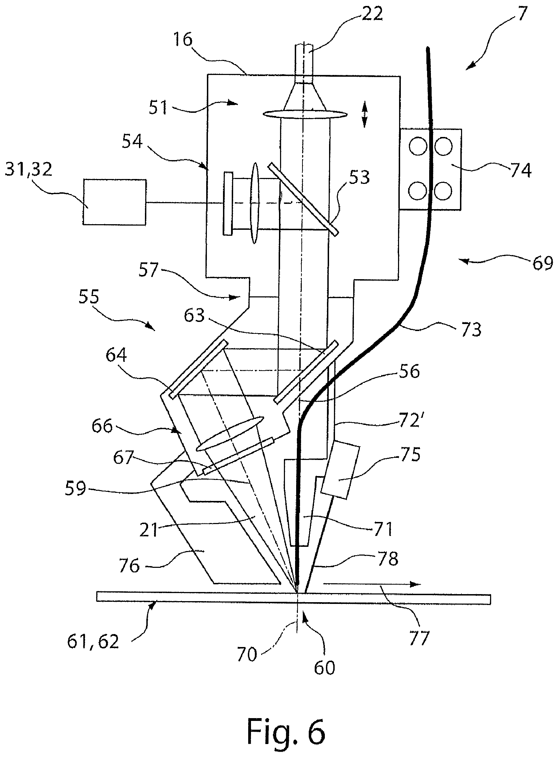

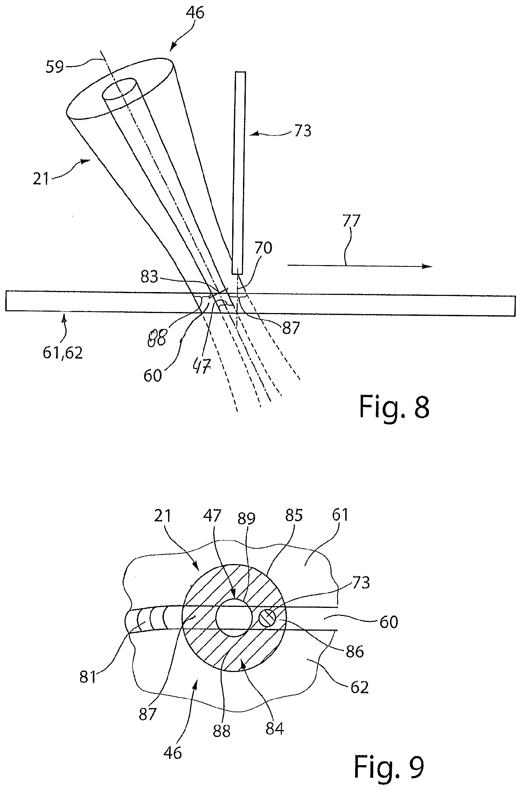

Die Bewegungseinrichtung 55 umfasst einen ersten und zumindest einen weiteren Umlenkspiegel 63, 64 sowie eine Bearbeitungsoptik 66 welche den Laserstrahl 21 fokussiert als auch vorzugsweise ein Schutzglas 67, durch welches die Bearbeitungsoptik 66 vor Verschmutzung geschützt wird. Durch die Bearbeitungsoptik 66 und/oder die Kollimationsoptik 51 kann ein Fokus 83 des Laserstrahls 21 eingestellt werden, der sowohl oberhalb, auf Oberflächenhöhe, oder auch unterhalb des Fügespalts 60 der Werkstückabschnitte 61, 62 liegen kann, wie dies nachfolgend noch anhand der Figuren 6 und 8 erläutert wird.

Durch die radial seitliche Auskopplung des Laserstrahls 21 durch die Bewegungseinrichtung 55 ist eine Zuführeinrichtung 69 in der Hauptachse 56 liegend anordenbar. Bevorzugt umfasst diese Zuführeinrichtung 69 eine Zuführdüse 71, welche bevorzugt über einen an dem Gehäuse 16 feststehend angeordneten Halter 72 in der Hauptachse 56 positioniert ist. Für den Schweißprozess kann ein Zusatzwerkstoff 73 zugeführt werden. Im Ausführungsbeispiel gemäß Figur 5 ist der Zusatzwerkstoff 73 als ein Zusatzdraht ausgebildet, der zentral durch eine Zuführdüse 71 hindurchgeführt wird. Am Gehäuse 16 des Laserbearbeitungskopfes 7 ist des Weiteren eine Fördereinrichtung 74 vorgesehen, die im vorliegenden Beispielsfall als Drahtförderer ausgebildet ist. Diese Fördereinrichtung 74 ist mit der Maschinen-Steuerungseinrichtung 31 und/oder Laser-Steuerungseinrichtung 32 verbunden und wird über diese angesteuert.

Durch die Positionierung der Zuführdüse 71 in der Hauptachse 56 wird der Zusatzwerkstoff 73 vorzugsweise senkrecht zur Oberfläche der Werkstückabschnitte 61, 62 beziehungsweise senkrecht zum Fügespalt 60 zugeführt.

An dem Halter 72 können zusätzlich noch ein Linienlaser 75 oder weitere optische Systeme vorgesehen sein. Die Ausrichtung dieser optischen Systeme ist derart, dass diese auf die Schweißstelle gerichtet sind. Die Schweißstelle ist durch das Auftreffen des Laserstrahls 21 auf den Fügespalt 60 definiert.

Des Weiteren kann in oder am Laserbearbeitungskopf 7 ein optisches Sensorsystem 54 vorgesehen sein, um die Schweißstelle beziehungsweise den Fügespalt 60 und/ oder den auf das Werkstück projizierten Linienlaser 78 zu erfassen. Über ein Auskoppelelement 53 kann ein ausgekoppelter Strahl dem Sensorsystem 54, wie beispielsweise einer Kamera, insbesondere CCD-Kamera, zur Erfassung des Fügespalts 60 zugeführt werden, welche die daraus gewonnenen Signale an die Steuerungseinrichtung 31, 32 weiterleitet.

Des Weiteren kann an der Bewegungseinrichtung 55 eine Düse, insbesondere Lineardüse 76 vorgesehen sein, durch welche Schutzgas in Richtung des der Bauteile 61, 62 auf die Schweißnaht ausströmt. Hierdurch wird die frische Schweißnahtoberraupe in der Abkühlphase vor Sauerstoff aus der Atmosphäre abgeschirmt. Zusätzlich strömt bevorzugt ein Teil des Schutzgases in Richtung der Verfahrbewegung 77 des Laserbearbeitungskopfes 7 während dem Laserschweißen, um auch bereits die Prozessstelle gegen die Atmosphäre abzuschirmen. Die Schutzgaszuführung könnte alternativ auch am Halter 72 angebracht sein um eine bessere Zugänglichkeit zu ermöglichen, dazu sind auch andere Düsenformen als eine Lineardüse möglich.

In Figur 6 ist eine schematische Schnittansicht einer alternativen Ausführungsform des Laserbearbeitungskopfes 7 gemäß Figur 5 dargestellt. Diese Ausführungsform gemäß Figur 6 unterscheidet sich zur Ausführungsform gemäß Figur 5 dahingehend, dass der Halter 72' an der Bewegungseinrichtung 55 angeordnet ist und nicht an dem Gehäuse 16. Im Übrigen entspricht diese Ausführungsform dem Laserbearbeitungskopf 7 gemäß Figur 5, so dass darauf vollständig Bezug genommen wird. Diese in Figur 6 dargestellte Ausführungsform des Laserbearbeitungskopfes 7 weist den Vorteil auf, dass die Bewegungseinrichtung 55 über die gesamten 360° um die Zuführachse 70, insbesondere die Hauptachse 56 drehbar ist. Eine vollständige Rotation der Bewegungseinrichtung 55 um die Zuführachse 70, insbesondere die Hauptachse 56, ist möglich. Des Weiteren weist diese Ausführungsform den Vorteil auf, dass durch das Mitdrehen des Linienlasers 75 die durch den Linienlaser 75 erzeugte Linie, welche senkrecht zum Fügespalt 60 ausgerichtet ist, in dieser Ausrichtung bei einer Drehbewegung bleibt. Dies erleichtert eine Auswertung der sich darstellenden Situation am Fügespalt 60 durch die Sensoren, wodurch die Prozesssicherheit erhöht werden kann.

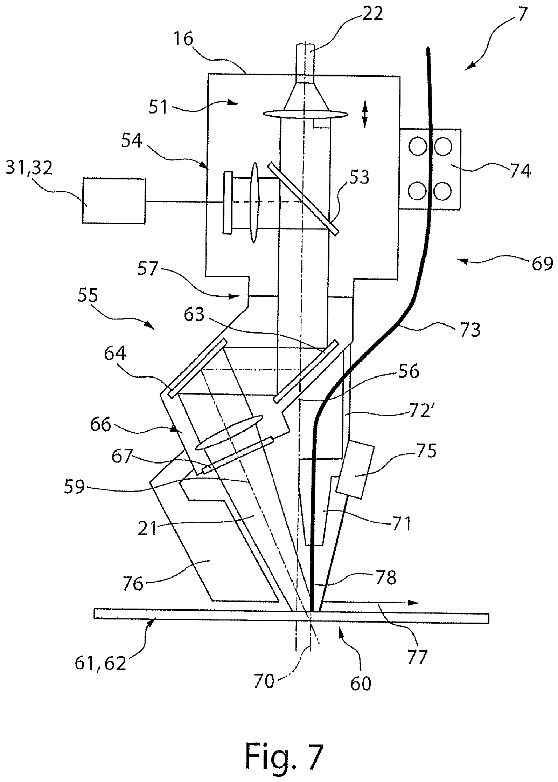

In Figur 7 ist eine schematische Seitenansicht einer alternativen Ausführungsform des Laserbearbeitungskopfes 7 zu Figur 6 dargestellt. Diese Ausführungsform weicht zu der in Figur 6 dargestellten Ausführungsform dahingehend ab, dass die Zuführachse 70 der Zuführeinrichtung 69 parallel zur Hauptachse 56 des Gehäuses 16 beziehungsweise zur Kollimationsoptik 51 ausgerichtet ist. Der Halter 72' ist außermittig an der Bewegungseinrichtung 55 angeordnet. Alternativ positioniert der an der Bewegungseinrichtung 55 angeordnete Halter 72' die Zuführdüse 71 mit der Zuführachse 70 parallel versetzt zur Hauptachse 56 der Kollimationsoptik. Im Übrigen gelten die analogen Ausführungen zu Figur 6 beziehungsweise Figur 5.

Durch die Maschinen-Steuerungseinrichtung 31 und/oder der Laser-Steuerungseinrichtung 32 wird das Laserschweißen der zwei Werkstückabschnitte 61, 62 gesteuert. Bevorzugt sind die Werkstückabschnitte 61, 62 derart zueinander positioniert, dass die Breite des Fügespaltes 60 nahezu gleich Null ist. Allerdings lässt sich dies aufgrund von Bearbeitungstoleranzen oder weiteren Anforderungen zumeist nicht hinreichend realisieren. Deshalb ist der Fügespalt 60 unterschiedlich breit. Durch die vorstehend beschriebene Anordnung des Laserbearbeitungskopfes 7, die Erfassung des Fügespalts 60 vor der Bildung der Schweißnaht 81 und die Veränderung der Strahlcharakteristik des Laserstrahls von einem Ringfokus 43 in einen Punktfokus 46 und umgekehrt, kann mit dem nachfolgend anhand der Figuren 8 bis 11 beschriebenen Schweißverfahren eine Anpassung an die sich ändernden Gegebenheiten unmittelbar durchgeführt und eine hohe Qualität der Schweißverbindung erzielt werden.

Bevor der durch die zu verschweißenden Werkstückabschnitte 61, 62 gebildete Fügespalt 60 verschweißt wird, kann durch ein Teach-in-Verfahren der Verlauf und/oder die Breite des Fügespaltes erfasst werden. Hierfür kann der Linienlaser 25 eingesetzt werden, der vorauseilend an dem Laserbearbeitungskopf 7 angeordnet ist und durch eine Sensorik erfasst wird, die in der Maschine, an der Bearbeitungsanlage, in oder am Laserbearbeitungskopf 7 angebracht ist. In Figur 5 wird diese Sensorik durch das Sensorsystem 54 gebildet. Alternativ kann das Sensorsystem 54 auch allein vorgesehen sein. Das Sensorsystem ist vorteilhaft im Laserbearbeitungskopf 7 angeordnet, so dass durch die Bearbeitungsoptik 66 auch die erforderlichen Prozessdaten für den Fügespalt 60 erfassbar sind. Das nachfolgende Verfahren zum Laserschweißen gilt sowohl für einen vorausgegangenen Teach-in-Modus als auch eine optische Erkennung des Fügespaltes 60 bei einer unmittelbar darauffolgenden Bildung einer Schweißnaht 81 in dem Fügespalt 60.

Bei der Erkennung eines ersten Spaltmaß eines Fügespaltes 60, welches beispielsweise kleiner als die Materialdicke der zu verschweißenden Werkstückabschnitte 61, 62 ist, wird die Einkopplung des Laserstrahls 21 in die Strahlführung 22 derart angesteuert, dass der Laserstrahl ein Strahlprofil mit einem Punktfokus 43 aufweist. Gleichzeitig wird die Zuführeinrichtung 69 für den Zusatzwerkstoff 73 stillgesetzt. Darauffolgend wird der Laserbearbeitungskopf 7 entlang dem Verlauf des Fügespaltes 60 verfahren und die Schweißnaht 81 gebildet, um den Fügespalt 60 zu schließen. Sofern vor dem Schweißvorgang kein Teach-in-Modus folgt, wird während des Laserschweißens zumindest die Spaltbreite des Fügespaltes 60 durch das Sensorsystem 54 überwacht und abgefragt.

Sofern sich die Spaltbreite des Fügespalts 60 ändert, so dass eine Spaltbreite erfasst wird, die größer ist als das erste Spaltmaß, werden mittels der Maschinen-Steuerungseinrichtung 31 und/oder Laser-Steuerungsein-richtung 32 die Schweißparameter geändert. Die Zuführeinrichtung 69 wird angesteuert, um den Zusatzwerkstoff hinzu zu führen. Des Weiteren wird die Strahlcharakteristik des Laserstrahls 21 von einem Punktfokus 43 in einen Ringfokus 46 geändert. Weitere Parameter, wie beispielsweise Laserintensität, können ebenfalls angepasst werden.

Bei einem Verschweißen der Werkstückabschnitte 62, 63 mit einem ringförmigen Strahlprofil des Laserstrahls 21 ist der Zusatzwerkstoff 73 vorauseilend zum Laserstrahl 21 angeordnet. Der Ringfokus 46 ist bevorzugt derart eingestellt, dass der Fokuspunkt 83 beispielsweise auf der Werkstückebene der Werkstückabschnitte 61, 62 liegt (Figur 8). Dadurch bildet sich eine ringförmige Strahlfläche 84, welche beispielsweise einen inneren strahlfreien Bereich 47 aufweist, der im Wesentlichen der Breite des Fügespaltes 60 entspricht, wie dies in Figur 9 dargestellt ist. Ein äußerer Strahlflächenrand 85 erstreckt sich in den Randbereich der Werkstückabschnitte 61, 62 hinein, der entlang des Fügespaltes 60 verläuft. Dadurch ergibt sich ein vorauseilender Strahlflächenabschnitt 86, der den Fügeabschnitt 60 überdeckt. Des Weiteren ergibt sich ein Strahlflächenabschnitt 87, der gegenüber dem Strahlflächenabschnitt 86 nacheilend ist. Links und rechts des Fügespaltes 60 ist eine überdeckende Strahlfläche 88, welche die Fügegeometrie beziehungsweise auf die Randkontur der Werkstückabschnitte 61, 62 einwirkt.

Die Zuführung des Zuführwerkstoffes 73 erfolgt derart, dass der vorauseilende Strahlflächenabschnitt 86 den Zusatzwerkstoff 73 kreuzt beziehungsweise der Zusatzwerkstoff 73 dem Fügespalt 60 derart zugeführt wird, dass dieser innerhalb des Strahlflächenabschnitts 86 liegt. Dadurch wird in diesem Bereich ein Aufschmelzen des Zusatzwerkstoffes 73 sowie der Randkontur und der Werkstückabschnitte 61, 62 und die Bildung einer Schweißnaht 81 erreicht. Durch den nacheilenden Strahlflächenabschnitt 87 wird das im vorauseilenden Flächenabschnitt gebildete Schmelzbad nachgewärmt. Dadurch kann die Abkühlgeschwindigkeit verringert werden, wodurch eine Verbesserung der Qualität der Schweißnaht 81 erzielt wird.

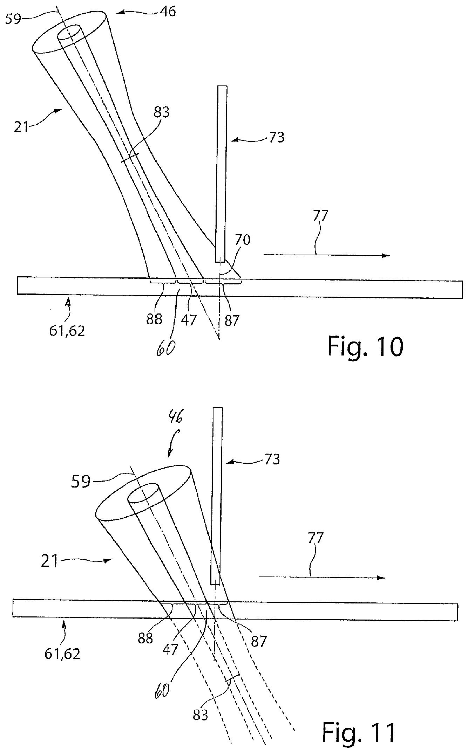

Die schematische Darstellung des auf den Fügespalt 60 gerichteten Laserstrahls 21 und des Zusatzwerkstoffes 73 in Figur 10 weicht dahingehend von der beschriebenen Ausführungsform in den Figuren 8 und 9 ab, dass der Fokus 83 des Ringfokusses 46 oberhalb der Werkstückabschnitte 61, 62 liegt. Dadurch ergeben sich analoge Verhältnisse wie bei den Ausführungsformen gemäß den Figuren 8 oder 9. Eine Abweichung liegt darin, dass bei einem Fokus 83 oberhalb der Werkstückebene bei gleicher Ausrichtung der Strahlachse 59 und der Hauptachse 56 ein bezogen auf den Fügespalt 60 längerer vorauseilender Strahlflächenabschnitt 86 als bei einer Lage des Fokus 83 auf der Werkstückebene der Werkstückabschnitte 61, 62 erhalten werden kann. Dies kann besonders bei niedrigen Vorschubgeschwindigkeiten vorteilhaft sein um den Zusatzwerkstoff 73 mit weniger Laserleistung zu beaufschlagen und so die Aufschmelzgeschwindigkeit an die ebenfalls niedrigere Zuführgeschwindigkeit anzupassen.

In Figur 11 ist der Ringfokus 46 derart eingestellt, dass der Fokus 83 unterhalb der Werkstückebene der Werkstückabschnitte 61, 62 liegt. Der Unterschied bezüglich den Verhältnissen in Figur 8 und 9 liegt darin, dass bei einem Fokus 83 unterhalb der Werkstückebene bei gleicher Ausrichtung der Strahlachse 59 und der Hauptachse 56 ein bezogen auf den Fügespalt 60 längerer nacheilender Strahlflächenabschnitt 87 als bei einer Lage des Fokus 83 auf der Werkstückebene der Werkstückabschnitte 61, 62 erhalten werden kann. Bei gleicher Vorschubgeschwindigkeit wird somit das Schmelzbad etwas länger nachgewärmt. Zudem ist in Figur 11 erkennbar, dass bedingt durch die Laserstrahlcharakteristik bei einer Fokuslage unter der Werkstückebene der Werkstückabschnitte 61, 62 der Zusatzwerkstoff 73 einen größeren Abstand durch den Laserstrahl 21 bis zur Werkstückebene der Werkstückabschnitte 61, 62 zurücklegen muss, wodurch auch eine höhere Zuführgeschwindigkeit erreicht werden kann, bei welcher der Zusatzwerkstoff 73 noch vollständig aufgeschmolzen wird. Die unter der Werkstückebene der Werkstückabschnitte 61, 62 liegende Fokuslage ist damit also besonders geeignet für hohe Vorschubgeschwindigkeiten oder wenn viel Zusatzwerkstoff benötigt wird, wie z.B. bei dicken Bauteilen oder vergleichsweise großem Spalt.

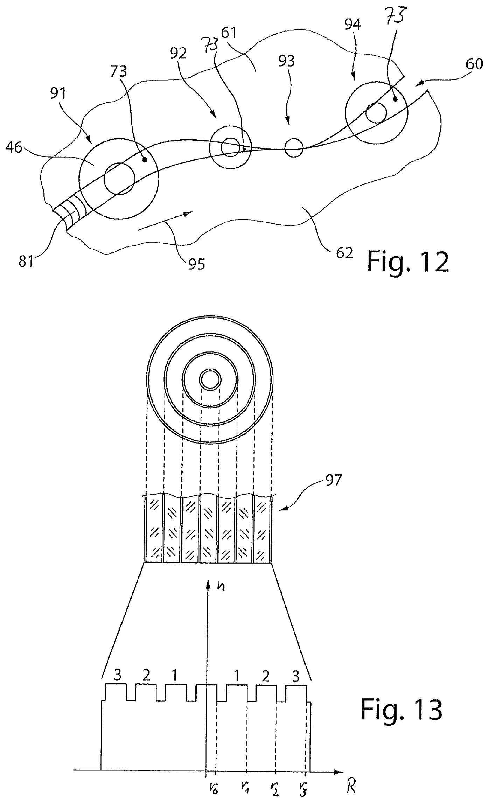

In Figur 12 ist beispielsweise ein Verlauf eines Fügespaltes 60 mit einer unterschiedlichen Breite zwischen den Werkstückabschnitten 61, 62 dargestellt. Gleichzeitig ist dieser Fügespalt 60 nicht geradlinig verlaufend, sondern erfolgt einer Konturlinie.

Zur weiteren Erörterung des Verfahrens sind beispielsweise vier Schweißpositionen 91 bis 94 dargestellt, die nachfolgend beschrieben sind. In der Schweißposition 91 ist eine Fallgestaltung gegeben, wie dies in den Figuren 8 und 9 beschrieben ist. Der Fügespalt 60 weist eine Breite auf, welche größer als das erste Spaltmaß ist, so dass die Verfahrensparameter gemäß dem zweiten Spaltmaß angesteuert werden. Bei einer Verfahrbewegung des Laserbearbeitungskopfes 7 in Schweißrichtung gemäß Pfeil 95 verringert sich die Breite des Fügespaltes 60. In der Schweißposition 92 ist durch das optische System 54, 75 erkannt worden, dass die Breite des Fügespaltes 60 im Bereich des ersten Spaltmaßes liegt. Daraufhin wird die Zuführung des Zusatzwerkstoffes 73 eingestellt und eine Änderung des Ringfokus 46 auf den Punktfokus 43 durchgeführt.

Durch die rotierend zum Gehäuse 16 vorgesehene Bewegungseinrichtung 55 kann bei einer Verfahrbewegung vom Schweißpunkt 91 zum Verschweißpunkt 92 in einfacher Weise der Ringfokus 46 an den Verlauf des Fügespaltes 60 durch eine Drehbewegung der Bewegungseinrichtung 55 angepasst werden. Zur Ansteuerung des Laserbearbeitungskopfes 7 gilt, dass die Hauptachse 56 im Fügespalt 60 verläuft.

Vom Schweißpunkt 92 bis zum Schweißpunkt 93 weist die Breite des Fügespaltes 60 beispielsweise ein erstes Spaltmaß auf. Darauffolgend breitet sich der Fügespalt 60 wiederum aus, so dass ausgehend vom Schweißpunkt 93 bis zum Schweißpunkt 94 wiederum Bedingungen eingestellt werden wie zwischen dem Schweißpunkt 91 und 92, um den sich aufweitenden Fügespalt 60 mit einer Schweißnaht zu verbinden.

In Figur 13 ist eine N-in-1-Faser (oder auch Multi-Koax-Faser) 97 in der Draufsicht und in einem schematischen Schnitt dargestellt (im vorliegenden Fall eine 4-in-1-Faser). Durch eine solche N-in-1-Faser 97 lässt sich die Strahlcharakteristik des Laserstrahls 21 im Hinblick auf mehrere Durchmesser des Ringfokus 46 einstellen. In Abhängigkeit der Auswahl des Ringes n = 1, 2, 3 ..., in welchem der Laserstrahl 21 eingekoppelt wird, können unterschiedliche Durchmesser der ringförmigen Strahlfläche 84 für den Ringfokus 46 erzielt werden.

## Patentansprüche

1. Verfahren zum Laserschweißen eines ersten und eines zweiten Werkstückabschnitts (61, 62) mittels eines Laserstrahls (21), der mit einem Laserbearbeitungskopf (7) entlang einem zwischen den Werkstückabschnitten (61, 62) gebildeten Fügespalt (60) geführt wird und bei dem der Laserstrahl (21) mit einer Bearbeitungsoptik (66) fokussiert wird, und bei dem ein Zusatzwerkstoff (73) mit einer Zuführeinrichtung (69) zum Fügespalt (60) ausgerichtet wird,
- an dem zumindest eine Spaltbreite des Fügespaltes (60) der zu verschweißenden Werkstückabschnitte (61, 62) erfasst wird, **gekennzeichnet durch** die Verwendung einer Steuerungseinrichtung (31,32) die eingerichtet ist die folgenden Schritte auszuführen
- dass die erfasste Spaltbreite entlang des Verlaufs des Fügespaltes (60) ausgewertet und mit zumindest einem ersten und einen zweiten Spaltmaß verglichen wird, wobei das erste Spaltmaß eine Spaltbreite umfasst, bei der eine Schweißnaht (81) ohne Zusatzwerkstoff (73) gebildet wird und das zweite Spaltmaß eine Spaltbreite umfasst, bei der zum Auffüllen des Fügespaltes (60) ein Zusatzwerkstoff (73) für die Bildung der Schweißnaht (81) zugeführt wird,
- dass bei einer erfassten Spaltbreite, die innerhalb des ersten Spaltmaßes liegt, während dem Laserschweißen die Zuführung des Zusatzwerkstoffs (73) zum Fügespalt (60) stillgesetzt und ein Strahlprofil des Laserstrahls (21) mit einem Punkt- oder Ringfokus (43, 46) eingestellt wird,
- dass bei einer erfassten Spaltbreite, die innerhalb des zweiten Spaltmaßes liegt, eine Zuführung des Zusatzwerkstoffes (73) zum Fügespalt (60) angesteuert und ein Strahlprofil des Laserstrahls (21) mit einem Ringfokus (46) eingestellt wird, und
- dass durch das Strahlprofil des Laserstrahls (21) mit dem Ringfokus (46) eine ringförmige Strahlfläche (84) gebildet wird, die den Fügespalt (60) überdeckt, wobei durch einen inneren Strahlflächenrand (89) ein innenliegender strahlfreier Bereich (47) begrenzt wird, welcher im Wesentlichen der Breite des Fügespalts (60) entspricht oder breiter ausgebildet ist und ein äußerer Strahlflächenrand (85) der ringförmigen Strahlfläche (84) beide Ränder der zu verschweißenden Werkstückabschnitte (61, 62) überdeckt.

2. Verfahren nach Anspruch 1, **dadurch gekennzeichnet, dass** der Fügespalt (60) vorzugsweise während einem Teach-in-Modus zum Erfassen des Verlaufs des Fügespalts (60), oder unmittelbar vor dem Einbringen der Schweißnaht (81) durch ein Sensorsystem (54), relativ zum Laserstrahl (21) koaxial oder im Vorlauf erfasst wird.

3. Verfahren nach Anspruch 1, **dadurch gekennzeichnet, dass** das erste Spaltmaß zumindest von einer Materialdicke der zu verschweißenden Werkstückabschnitte (61, 62) ausgehend ausgewählt wird und das erste Spaltmaß kleiner als die Materialdicke der zu verschweißenden Werkstückabschnitte (61, 62) ist, und vorzugsweise das erste Spaltmaß gleich oder kleiner als ein Anteil von 15 % der Materialdicke der zu verschweißenden Werkstückabschnitte (61, 62), besonders bevorzugt gleich oder kleiner als ein Anteil von 10 % der Materialdicke der zu verschweißenden Werkstückabschnitte (61, 62) ist und vorzugsweise das zweite Spaltmaß größer als das erste Spaltmaß ist.

4. Verfahren nach einem der vorhergehenden Ansprüche, **dadurch gekennzeichnet, dass** der Zusatzwerkstoff (73) zur Strahlachse (59) des Laserstrahls (21) in Schweißrichtung vorauseilend dem Fügespalt (60) zugeführt wird und vorzugsweise als Zusatzwerkstoff (73) ein Zusatzdraht eingesetzt wird, der über eine Drahtzuführeinrichtung zugeführt oder vorzugsweise als Zusatzwerkstoff (73) ein Pulver eingesetzt wird, das über zumindest eine Düse, vorzugsweise koaxial zum Laserstrahl (21), zugeführt wird.

5. Verfahren nach einem der vorhergehenden Ansprüche, **dadurch gekennzeichnet, dass** in einem Strahlflächenabschnitt (86) der ringförmigen Strahlfläche (84) des Laserstrahls (21), der durch einen in Vorlaufrichtung vorderen, den Fügespalt (60) überdeckenden Bereich des ringförmigen Strahlfläche (84) gebildet wird, der Zusatzwerkstoff (73) zugeführt wird.

6. Verfahren nach einem der vorhergehenden Ansprüche, **dadurch gekennzeichnet, dass** in einem nacheilenden, den Fügespalt (60) überdeckenden Strahlflächenabschnitt (87) der ringförmigen Strahlfläche (84) die im vorauseilenden Strahlflächenabschnitt (86) gebildete Schmelze nachgewärmt wird.

7. Verfahren nach einem der Ansprüche 1 bis 6, **dadurch gekennzeichnet, dass** die Breite eines den Fügespalt (60) überdeckenden Strahlflächenabschnitts (88) der ringförmigen Strahlfläche (84) des Laserstrahls (21) durch einen Abstand des Fokuspunkt (83) oberhalb oder unterhalb einer Ebene der zu verbindenden Werkstückabschnitte (61, 62) eingestellt wird.

8. Verfahren nach einem der vorhergehenden Ansprüche, **dadurch gekennzeichnet, dass** das Strahlprofil des Laserstrahls (21) mit einem Ringfokus (46) durch eine 2-in-1-Faser, eine 3-in-1-Faser, ein Axicon oder eine N-in-1-Faser (97) gebildet wird.

9. Verfahren nach einem der vorhergehenden Ansprüche, **dadurch gekennzeichnet,**
- **dass** der Zusatzwerkstoff (73) mit einer Zuführeinrichtung (69) dem Fügespalt (60) zugeführt wird und die Zuführeinrichtung (69) in einer Zuführachse (70) zum Fügespalt (60), vorzugsweise senkrecht zum Fügespalt (60), ausgerichtet wird,
- **dass** der Laserstrahl (21) vom Gehäuse (16) in eine am Gehäuse (16) angeordnete Bewegungseinrichtung (55) eingekoppelt und in eine Strahlachse (59) der Bewegungseinrichtung (55) übergeführt wird,
- **dass** die Strahlachse (59) der Bewegungseinrichtung (55) entsprechend dem Verlauf des Fügespalts (60) in Schweißrichtung um die Zuführachse (70) des Zusatzwerkstoffes (73) rotierend angetrieben wird und während der Rotationsbewegung der Bewegungseinrichtung (55) die Strahlachse (59) den Zuführwerkstoff (73) im Fügespalt (60) kreuzt.

10. Laserbearbeitungsmaschine mit einer Laserquelle (12) und mit einer Strahlführung (22), die sich zwischen der Laserquelle (12) und einem Bearbeitungskopf (7) erstreckt, in welchem eine Bearbeitungsoptik (66) vorgesehen ist, wobei mit dem Laserbearbeitungskopf (7) ein Laserstrahl (21) auf einen Fügespalt (60) gerichtet ist, der zwischen einem ersten und einem zweiten zu verschweißenden Werkstückabschnitt (61, 62) gebildet ist und mit einer Zuführeinrichtung (69), die einen Zusatzwerkstoff (73) dem Fügespalt (60) zuführt, ,
- wobei die Zuführeinrichtung (69) eine Zuführdüse (71) aufweist, die in einer Zuführachse (70) liegt und den Zusatzwerkstoff (73) dem Fügespalt (60) zuführt,
- wobei zur Erfassung des Fügespalts (60) eine optische Einrichtung vorgesehen ist, **dadurch gekennzeichnet,**
- **dass** der Bearbeitungskopf (7) eine Bewegungseinrichtung (55) umfasst, durch welche der entlang einer Hauptachse (56) geführte Laserstrahl (21) oberhalb dem Fügespalt (60) umgelenkt und in eine Strahlachse (59) in der Bewegungseinrichtung (55) übergeführt ist, welche in einem Winkel zur Hauptachse (56) oder zur Zuführachse (70) oder beidem ausgerichtet ist und den Fügespalt (60) kreuzt,
- **dass** die Bewegungseinrichtung (55) um die Hauptachse (56) oder Zuführachse (70) rotierend vorgesehen ist
- **dass** eine Maschinen-Steuerungseinrichtung (31) und eine Laser-Steuerungseinrichtung (32) vorgesehen sind, die dazu eingerichtet sind
- **dass** die Maschinen-Steuerungseinrichtung (31) bei einer erfassten Spaltbreite, die innerhalb des ersten Spaltmaßes liegt, die Zuführeinrichtung (69) des Zuführwerkstoffs (73) stillsetzt und die Laser-Steuerungseinrichtung (32) ein Strahlprofil des Laserstrahls (21) mit einem Punkt- oder Ringfokus (43, 46) ansteuert, und
- **dass** die Maschinen-Steuerungseinrichtung (31) bei einer erfassten Spaltbreite, die innerhalb des zweiten Spaltmaßes liegt, die Zuführeinrichtung (69) zum Zuführen des Zusatzwerkstoffs (73) ansteuert und die Laser-Steuerungseinrichtung (32) ein Strahlprofil des Laserstrahls (21) mit einem Ringfokus ansteuert, und
- **dass** durch das Strahlprofil des Laserstrahls (21) mit dem Ringfokus (46) eine ringförmige Strahlfläche (84) gebildet wird, die den Fügespalt (60) überdeckt, wobei durch einen inneren Strahlflächenrand (89) ein innenliegender strahlfreier Bereich (47) begrenzt wird, welcher im Wesentlichen der Breite des Fügespalts (60) entspricht oder breiter ausgebildet ist und ein äußerer Strahlflächenrand (85) der ringförmigen Strahlfläche (84) beide Ränder der zu verschweißenden Werkstückabschnitte (61, 62) überdeckt.

11. Laserbearbeitungsmaschine nach Anspruch 10, **dadurch gekennzeichnet, dass** die Zuführachse (70) der Zuführeinrichtung (69) parallel zur Hauptachse (56) verläuft oder dass die Zuführachse (70) der Zuführeinrichtung (69) in der Hauptachse (56) liegt oder dass die Hauptachse (56) senkrecht zum Fügespalt (60) ausgebildet ist.

12. Laserbearbeitungsmaschine nach Anspruch 10 oder 11, **dadurch gekennzeichnet, dass** die Bewegungseinrichtung (55) in einem Winkel von mindestens +/- 90°, besonders bevorzugt mindestens +/- 135°, ganz besonders bevorzugt mindestens +/- 180°, drehbar um die Hauptachse (56), vorzugsweise mittels eines Drehlagers (57), gelagert ist.

13. Laserbearbeitungsmaschine nach einem der Ansprüche 10 bis 121, **dadurch gekennzeichnet, dass** die Bewegungseinrichtung (55) zumindest einen Umlenkspiegel (63, 64), eine insbesondere als Fokussierlinse ausgebildete Bearbeitungsoptik (66) und vorzugsweise ein strahlaustrittseitig angeordnetes Schutzglas (67) aufweist.

14. Laserbearbeitungsmaschine nach einem der Ansprüche 10 bis 13, **dadurch gekennzeichnet, dass** die Zuführungseinrichtung (69) einen fest an einem Gehäuse (16) oder an der Bewegungseinrichtung (55) angeordneten Halter (72, 72') zur ortsfesten Aufnahme der Zuführungsdüse (71) in der Hauptachse (56) aufweist und vorzugsweise am Gehäuse (16) eine fest daran angeordnete Fördereinrichtung (74) aufnimmt und vorzugsweise an dem Halter (72, 72') der Zuführungseinrichtung (69) ein Linienlaser (75) angeordnet ist, dessen Laserstrahl (78) vorzugsweise auf den Fügespalt (60) gerichtet ist.

15. Laserbearbeitungsmaschine nach einem der Ansprüche 10 bis 14, **dadurch gekennzeichnet, dass** an der Bewegungseinrichtung (55) eine vorzugsweise in der Höhe zur Bewegungseinrichtung (55) einstellbare Lineardüse (76) zum Zuführen von Schutzgas vorgesehen ist.

16. Laserbearbeitungsmaschine nach einem der Ansprüche 10 bis 15, **dadurch gekennzeichnet, dass** zur Erzeugung eines Strahlprofils des Laserstrahls (21) mit einem Ringfokus (46) eine 2-in-1-Faser (37), eine 3-in-1-Faser oder eine N-in-1-Faser (97) mit mehreren koaxialen Ringfasern vorgesehen ist.

## Claims

1. Method for laser welding a first and a second workpiece portion (61, 62) by means of a laser beam (21), which is guided along a joining gap (60) formed between the workpiece portions (60, 61) by a laser processing head (7) and in which the laser beam (21) is focused with a processing optical system (66), and in which an additional substance (73) having a supply device (69) is aligned in relation to the joining gap (60),
- at least one gap width of the joining gap (60) of the workpiece portions (61, 62) to be welded is detected **characterised by** the use of a control device (31, 32), which is provided for controlling the following steps,
- that the detected gap width is evaluated along the course of the joining gap (60) and is compared with at least one first and one second gap size, wherein the first gap size comprises a gap width, in which a welded seam (81) is formed without the additional substance (73) and the second gap size comprises a gap width, with which an additional substance (73) is supplied for the formation of the welded seam (81) for filling the joining gap (60),
- that with a detected gap width, which is within the first gap size, the supply of the additional substance (73) to the joining gap (60) is shut down during the laser welding, and a beam profile of the laser beam (21) is set with a point or ring focus (43, 46),
- that with a detected gap width, which is within the second gap size, a supply of the additional substance (73) to the joining gap (60) is controlled, and a beam profile of the laser beam (21) is set with a ring focus (46), and
- that an annular beam surface (84) is formed by the beam profile of the laser beam (21) having a ring focus (46), said beam surface (84) covering the joining gap (60), wherein an inner beam-free region (47) is delimited by an inner beam surface edge (89), said region (47) substantially corresponding to the width of the joining gap (60) or being formed wider, and an outer beam surface edge (85) of the annular beam surface (84) covering the two edges of the workpiece portions (61, 62) to be welded.

2. Method according to claim 1, **characterised in that** the joining gap (60) is preferably detected by a sensor system (54) during a teach-in mode for detecting the course of the joining gap (60) or immediately before introducing the welded seam (81), coaxially relative to the laser beam (21) or in advance.

3. Method according to claim 1, **characterised in that** the first gap size is selected based at least one a material thickness of the workpiece portions (61, 62) to be welded, and the first gap size is smaller than the material thickness of the workpiece portions (61, 62) to be welded, and, preferably, the first gap size is equal to or less than a share of 15% of the material thickness of the workpiece portions (61, 62) to be welded, particular preferably equal to or less than a share of 10% of the material thickness of the workpiece portions (61, 62) to be welded and preferably the second gap size is greater than the first gap size.

4. Method according to one of the preceding claims, **characterised in that** the additional substance (73) is supplied to the joining gap (60) in advance in the welding direction in relation to the beam axis (59) of the laser beam (21) and preferably an additional wire is used as the additional substance (73), which is supplied via a wire supply device, or a powder is used as the additional substance (73), which is supplied via at least one nozzle, preferably coaxially to the laser beam (21).

5. Method according to one of the preceding claims, **characterised in that** the additional substance (73) is supplied in a beam surface portion (86) of the annular beam surface (84) of the laser beam (21), which is formed by a region of the annular beam surface (84) that is in front in the advance direction and covers the joining gap (60).

6. Method according to one of the preceding claims, **characterised in that** the molten mass formed in the advance beam surface portion (86) is heated in a beam surface portion (87) of the annular beam surface (84), said beam surface portion (87) being behind and covering the joining gap (60).

7. Method according to one of claims 1 to 6, **characterised in that** the width of a beam surface portion (88) of the annular beam surface (84) of the laser beam (21), said beam surface portion (88) covering the joining gap (60), is set above or below a plane of the workpiece portions (61, 62) to be connected by a distance apart of the focal point (83) .

8. Method according to one of the preceding claims, **characterised in that** the beam profile of the laser beam (21) is formed with a ring focus (46) by a 2-in-1 fibre, a 3-in-1 fibre, an axicon or an N-in-1 fibre (97).

9. Method according to one of the preceding claims, **characterised in that**
- the additional substance (73) is supplied to the joining gap (60) by a supply device (69), and the supply device (69) is aligned on a supply axis (70) in relation to the joining gap (60), preferably perpendicular to the joining gap (60),
- the laser beam (21) is coupled into a movement device (55) arranged on the housing (16) by the housing (16) and transferred into a beam axis (59) of the movement device (55),
- the beam axis (59) of the movement device (55) is rotatingly driven corresponding to the course of the joining gap (60) in the welding direction around the supply axis (70) of the additional substance (73), and the beam axis (59) crosses the additional substance (73) in the joining gap (60) during the rotational movement of the movement device (55).

10. Laser processing machine having a laser source (12) and having a beam guide (22), which extends between the laser source (12) and a processing head (7), in which a processing optical system (66) is provided, wherein a laser beam (21) is directed towards a joining gap (60) by the laser processing head (7), said joining gap (60) being formed between a first and a second workpiece portion (61, 62) to be welded and having a supply device (69), which supplies an additional substance (73) to the joining gap (60),
- wherein the supply device (69) has a supply nozzle (71), which lies on a supply axis (70) and supplies the additional substance (73) to the joining gap (60),
- wherein an optical device is provided for detecting the joining gap (16), **characterised in**
- **that** the processing head (7) comprises a movement device (55), by means of which the laser beam (21) guided along a main axis (56) is deflected above the joining gap (60) and is transferred into a beam axis (59) in the movement device (55), which is aligned at an angle to the main axis (56) or to the supply axis (70) or both and crosses the joining gap (60),
- **that** the movement device (55) is provided rotatingly around the main axis (56) or supply axis (70),
- **that** a machine control device (31) and a laser control device (32) are provided, which is adapted for,
- **that** the machine control device (31) shuts downs the supply device (69) of the additional substance (73) in the event of a detected gap width, which lies inside the first gap size, and the laser control device controls a beam profile of the laser beam (21) having a point or ring focus (43, 46), and
- **that** the machine control device (31) controls the supply device (69) for supplying the additional substance (73) in the event of a detected gap width, which lies within a second gap size, and the laser control device (32) controls a beam profile of the laser beam (21) having a ring focus, and
- **that** an annular beam surface (84) is formed by the beam profile of the laser beam (21) having a ring focus (46), said beam surface (84) covering the joining gap (60), wherein an inner beam-free region (47) is delimited by an inner beam surface edge (89), said region (47) substantially corresponding to the width of the joining gap (60) or being formed wider, and an outer beam surface edge (85) of the annular beam surface (84) covering the two edges of the workpiece portions (61, 62) to be welded.

11. Laser processing machine according to claim 13, **characterised in that** the supply axis (70) of the supply device (69) runs in parallel to the main axis (56), or that the supply axis (70) of the supply device (69) lies on the main axis (56), or that the main axis (56) is formed perpendicularly to the joining gap (60)

12. Laser processing machine according to claim 10 or 11, **characterised in that** the movement device (55) is mounted at an angle of at least +/- 90°, particularly preferably at least +/- 135°, quite particularly preferably at least +/- 180°, rotatably around the main axis (56), preferably by means of a rotation mount (57).

13. Laser processing machine according to one of claims 13 to 17, **characterised in that** the movement device (55) has at least one deflection mirror (63, 64), a processing optical system (66) formed, in particular, as a focusing lens, and preferably a protective glass (67) arranged on the beam output side.

14. Laser processing machine according to one of claims 10 to 13, **characterised in that** the supply device (69) has a bracket (72, 72') fixedly arranged on a housing (16) or on the movement device (55) for the fixed receiving of the supply nozzle (71) in the main axis (56) and, on the housing (16), preferably receives a conveying device (47) arranged fixedly thereon, and a line laser (75) is arranged on the bracket (72, 72') of the supply device (69), the laser beam (78) of which line laser (75) preferably being directed towards the joining gap (60).

15. Laser processing machine according to one of claims 10 to 14, **characterised in that**, on the movement device (55), a linear nozzle (76) that can preferably be set in terms of height in relation to the movement device (55) is provided for supplying protective gas.

16. Laser processing machine according to one of claims 10 to 15, **characterised in that** a 2-in-1 fibre (37), a 3-in-1 fibre or an N-in-1 fibre (97) having several coaxial ring fibres is provided for generating a beam profile of the laser beam (21) having a ring focus (46).

## Revendications

1. Procédé destiné à souder au laser une première et une deuxième partie de pièce (61, 62) au moyen d'un rayon laser (21) qui est guidé par une tête d'usinage laser (7) le long d'une fente de jonction (60) formée entre les parties de pièce (61, 62), et lors duquel le rayon laser (21) est focalisé grâce à une optique d'usinage (66), et lors duquel une matière d'apport (73) est orientée grâce à un dispositif d'amenée (69) par rapport à la fente de jonction (60),
- au niveau de laquelle est saisie au moins une largeur de fente de la fente de jonction (60) existant entre lesdites parties de pièce (61, 62) à assembler par soudage, **caractérisé par** l'utilisation d'un dispositif de commande (31, 32) qui est configuré pour exécuter les étapes suivantes dans lesquelles
- la largeur de fente saisie est évaluée le long du tracé de la fente de jonction (60) et est comparée à au moins une première et une deuxième plage dimensionnelle de la fente, la première plage dimensionnelle de la fente comprenant une largeur de fente pour laquelle un cordon de soudure (81) est formé sans matière d'apport (73), et la deuxième plage dimensionnelle de la fente comprenant une largeur de fente pour laquelle le remplissage de la fente de jonction (60) nécessite l'amenée d'une matière d'apport (73) pour former le cordon de soudure (81),
- lorsqu'une largeur de fente saisie se situe à l'intérieur de la première plage dimensionnelle de la fente, l'amenée de la matière d'apport (73) à la fente de jonction (60) est mise à l'arrêt pendant l'opération de soudage au laser et un profil de rayon du rayon laser (21) est réglé de manière à présenter un foyer ponctuel ou en anneau (43, 46),
- lorsqu'une largeur de fente saisie se situe à l'intérieur de la deuxième plage dimensionnelle de la fente, une amenée de la matière d'apport (73) à la fente de jonction (60) est activée et un profil de rayon du rayon laser (21) est réglé de manière à présenter un foyer en anneau (46),
- le profil de rayon du rayon laser (21) présentant le foyer en anneau (46) permet de former une surface de rayonnement (84) en forme d'anneau qui recouvre la fente de jonction (60), un bord intérieur de surface de rayonnement (89) délimitant une zone intérieure (47) exempte de rayonnement, laquelle correspond essentiellement à la largeur de la fente de jonction (60) ou est plus large que celle-ci, et un bord extérieur de surface de rayonnement (85) de la surface de rayonnement (84) en forme d'anneau recouvrant les deux bords des parties de pièce (61, 62) à assembler par soudage.

2. Procédé selon la revendication 1, **caractérisé en ce que** la fente de jonction (60) est saisie de préférence pendant un mode d'apprentissage destiné à saisir le tracé de la fente de jonction (60) ou est saisie immédiatement avant la réalisation du cordon de soudure (81), et ce de manière coaxiale par rapport au rayon laser (21) ou en marche avant grâce à un système de capteurs (54).

3. Procédé selon la revendication 1, **caractérisé en ce que** la première plage dimensionnelle de la fente est choisie au moins à partir d'une épaisseur de matière des parties de pièce (61, 62) à assembler par soudage et que ladite première plage dimensionnelle de la fente est plus petite que l'épaisseur de matière desdites parties de pièce (61, 62) à assembler par soudage, et que de préférence la première plage dimensionnelle de la fente est égale ou inférieure à un pourcentage de 15 % de l'épaisseur de matière des parties de pièce (61, 62) à assembler par soudage, de manière privilégiée égale ou inférieure à un pourcentage de 10 % de l'épaisseur de matière des parties de pièce (61, 62) à assembler par soudage, et **en ce que** la deuxième plage dimensionnelle de la fente est de préférence plus grande que la première plage dimensionnelle de la fente.

4. Procédé selon l'une quelconque des revendications précédentes, **caractérisé en ce que** la matière d'apport (73) est amenée à la fente de jonction (60) de manière à précéder l'axe de rayon (59) du rayon laser (21) dans la direction de soudage, et **en ce que** la matière d'apport (73) utilisée est de préférence un fil d'apport qui est amené par un dispositif d'amenée de fil, ou **en ce que** la matière d'apport (73) utilisée est de préférence une poudre qui est amenée par au moins une buse, et ce de préférence coaxialement au rayon laser (21).

5. Procédé selon l'une quelconque des revendications précédentes, **caractérisé en ce que** la matière d'apport (73) est amenée dans une partie de surface de rayonnement (86) de la surface de rayonnement (84) en forme d'anneau du rayon laser (21) laquelle est formée, vue dans le sens du mouvement d'avance, par une partie avant de la surface de rayonnement (84) en forme d'anneau qui recouvre la fente de jonction (60).

6. Procédé selon l'une quelconque des revendications précédentes, **caractérisé en ce que** la matière fondue formée dans la partie de surface de rayonnement (86) qui précède le rayon est soumise, dans une partie de surface de rayonnement (87) de la surface de rayonnement (84) en forme d'anneau qui recouvre la fente de jonction (60) et suit le rayon, à un postchauffage.

7. Procédé selon l'une quelconque des revendications 1 à 6, **caractérisé en ce que** la largeur d'une partie de surface de rayonnement (88) de la surface de rayonnement (84) en forme d'anneau du rayon laser (21) qui recouvre la fente de jonction (60) est réglée par un écart du point de focalisation (83) situé au-dessus ou au-dessous d'un plan des parties de pièce (61, 62) à assembler.

8. Procédé selon l'une quelconque des revendications précédentes, **caractérisé en ce que** le profil de rayon du rayon laser (21) présentant un foyer en anneau (46) est formé par une fibre 2-en-1, une fibre 3-en-1, un axicon ou une fibre n-en-1 (97).

9. Procédé selon l'une quelconque des revendications précédentes, **caractérisé en ce que**
- la matière d'apport (73) est amenée à la fente de jonction (60) grâce à un dispositif d'amenée (69) et que le dispositif d'amenée (69) est orienté conformément à un axe d'amenée (70) par rapport à la fente de jonction (60), de préférence perpendiculairement à la fente de jonction (60),
- le rayon laser (21) est injecté à partir du boîtier (16) dans un dispositif de déplacement (55) disposé dans ledit boîtier (16) et passe dans un axe de rayon (59) du dispositif de déplacement (55),
- l'axe de rayon (59) du dispositif de déplacement (55) est entraîné dans la direction de soudage conformément au tracé de la fente de jonction (60) de manière à tourner autour de l'axe d'amenée (70) de la matière d'apport (73) et que, pendant ledit mouvement de rotation du dispositif de déplacement (55), l'axe de rayon (59) croise la matière d'apport (73) dans la fente de jonction (60).

10. Machine d'usinage au laser pourvue d'une source laser (12) et d'un guide de rayon (22) qui s'étend entre la source laser (12) et une tête d'usinage (7) dans laquelle est prévue une optique d'usinage (66), la tête d'usinage laser (7) permettant de diriger un rayon laser (21) sur une fente de jonction (60) qui est formée entre une première et une deuxième partie de pièce (61, 62) à assembler par soudage, et pourvue d'un dispositif d'amenée (69) qui amène une matière d'apport (73) à la fente de jonction (60),
- le dispositif d'amenée (69) présentant une buse d'amenée (71) qui se situe dans un axe d'amenée (70) et qui amène la matière d'apport (73) à la fente de jonction (60),
- un dispositif optique étant prévu en vue de saisir la fente de jonction (60),
**caractérisée en ce que**
- la tête d'usinage (7) comprend un dispositif de déplacement (55) grâce auquel le rayon laser (21) guidé le long d'un axe principal (56) est dévié au-dessus de la fente de jonction (60) et passe dans un axe de rayon (59) à l'intérieur du dispositif de déplacement (55) qui est orienté selon un angle donné par rapport à l'axe principal (56) ou à l'axe d'amenée (70) ou par rapport auxdits axes à la fois, et croise la fente de jonction (60),
- le dispositif de déplacement (55) est prévu de manière à tourner autour de l'axe principal (56) ou de l'axe d'amenée (70),
- il est prévu un dispositif de commande machine (31) et un dispositif de commande laser (32) qui sont configurés de telle sorte que
- le dispositif de commande machine (31) met à l'arrêt le dispositif d'amenée (69) de la matière d'apport (73) lorsqu'une largeur de fente saisie se situe à l'intérieur de la première plage dimensionnelle de la fente, et le dispositif de commande laser (32) active un profil de rayon du rayon laser (21) présentant un foyer ponctuel ou en anneau (43, 46), et
- le dispositif de commande machine (31) active le dispositif d'amenée (69) en vue d'amener la matière d'apport (73) lorsqu'une largeur de fente saisie se situe à l'intérieur de la deuxième plage dimensionnelle de la fente, et le dispositif de commande laser (32) active un profil de rayon du rayon laser (21) présentant un foyer en anneau, et
- le profil de rayon du rayon laser (21) présentant le foyer en anneau (46) permet de former une surface de rayonnement (84) en forme d'anneau qui recouvre la fente de jonction (60), un bord intérieur de surface de rayonnement (89) délimitant une zone intérieure (47) exempte de rayonnement, laquelle correspond essentiellement à la largeur de la fente de jonction (60) ou est plus large que celle-ci, et un bord extérieur de surface de rayonnement (85) de la surface de rayonnement (84) en forme d'anneau recouvrant les deux bords des parties de pièce (61, 62) à assembler par soudage.

11. Machine d'usinage au laser selon la revendication 10, **caractérisée en ce que** l'axe d'amenée (70) du dispositif d'amenée (69) s'étend parallèlement à l'axe principal (56) ou que l'axe d'amenée (70) du dispositif d'amenée (69) se situe dans l'axe principal (56) ou que l'axe principal (56) est perpendiculaire à la fente de jonction (60).

12. Machine d'usinage au laser selon la revendication 10 ou 11, **caractérisée en ce que** le dispositif de déplacement (55) est logé selon un angle d'au moins +/- 90°, de manière privilégiée d'au moins +/-135°, de manière particulièrement privilégiée d'au moins +/-180°, de manière à tourner, de préférence au moyen d'un coussinet de pivotement (57), autour de l'axe principal (56).

13. Machine d'usinage au laser selon l'une quelconque des revendications 10 à 12, **caractérisée en ce que** le dispositif de déplacement (55) présente au moins un miroir de déviation (63, 64), une optique d'usinage (66) réalisée en particulier sous forme de lentille de focalisation, et de préférence un verre protecteur (67) disposé côté sortie de rayon.

14. Machine d'usinage au laser selon l'une quelconque des revendications 10 à 13, **caractérisée en ce que** le dispositif d'amenée (69) présente, dans l'axe principal (56), un élément de maintien (72, 72') disposé de manière fixe sur un boîtier (16) ou sur le dispositif de déplacement (55) en vue de recevoir de manière fixe la buse d'amenée (71) et reçoit, de préférence sur le boîtier (16), un dispositif de transport (74) disposé de manière fixe sur celui-ci, et **en ce que** de préférence sur l'élément de maintien (72, 72') du dispositif d'amenée (69) est disposé un laser linéaire (75) dont le rayon laser (78) est dirigé de préférence sur la fente de jonction (60).

15. Machine d'usinage au laser selon l'une quelconque des revendications 10 à 14, **caractérisée en ce qu'**une buse linéaire (76) réglable de préférence en hauteur par rapport au dispositif de déplacement (55) est prévue sur le dispositif de déplacement (55) en vue d'assurer l'amenée de gaz protecteur.

16. Machine d'usinage au laser selon l'une quelconque des revendications 10 à 15, **caractérisée en ce qu'**une fibre 2-en-1 (37), une fibre 3-en-1 ou une fibre n-en-1 (97) présentant plusieurs fibres annulaires coaxiales est prévue pour réaliser un profil de rayon du rayon laser (21) présentant un foyer en anneau (46).
